# EUROPEAN PATENT APPLICATION

(11) **EP 1 612 361 A1**
(43) Date of publication of application: **04.01.2006**
(21) Application number: 04726815.6
(22) Date of filing: 09.04.2004
(51) Int. Cl.: E05F 15/10, B60J 1/00, B60J 5/00, B60J 7/057, G01L 1/16

(54) **MOVING DEVICE AND OPEN/CLOSE CONTROL DEVICE FOR MOVING BODY**

(30) Priority: 09.04.2003 JP 2003105084; 11.04.2003 JP 2003107614
(71) Applicant: MATSUSHITA ELECTRIC INDUSTRIAL CO., LTD., Kadoma-shi, Osaka 571-8501 (JP)
(72) Inventor: OGINO, Hiroyuki 2 Ban 35 Gou, Nara-shi, Nara 630-8024 (JP); UEDA, Shigeki 80-11, Yatayama-cho, Nara 630-1055 (JP); KASAI, Isao 8 Banntyou 219 Bannti, Nabari-shi, Mie 518-0428 (JP)
(74) Representative: Grünecker, Kinkeldey, Stockmair & Schwanhäusser Anwaltssozietät
(86) International application number: PCT/JP2004/005153
(87) International publication number: WO 2004/090273

(57) **Abstract**

Conventionally, since there has been a problem that with a pressure sensor 3 provided on an openable and closable door such as a sliding door 2, when a contact of an object such as the hand cannot be detected, the openable and closable door continues a closing operation even in the event that the hand is removed in order to avoid a risk of being caught, when a human body exists in the vicinity, the openable and closable door which is being closed collides with the human body.

A moving device of the invention is constructed such that when an object detecting means 8 provided on the sliding door 2 detects a contact of an object or a removal of the object that has been in contact, a driving means 20 is controlled so as to reverse the moving direction of the sliding door 2, and even in the event that a contact of an object cannot be detected in the middle of a closing operation of the sliding door due to the object in contact being soft and/or the speed of the moving body being slow, when a removal of the object is detected by the object detecting means 8, the driving of the sliding door 2 is controlled to be reversed, and hence the safety is increased.

## Description

### <Technical Field>

The present invention relates to a moving device having a safety function against an unnecessary contact of an object. In addition, the present invention relates an opening and closing control device for controlling the opening and closing of a moving body by detecting that a moving body catches a certain object in a self-propelled running device, automotive power window, electric sliding door and electric sunroof, and an automatic door of a building.

### <Background Art>

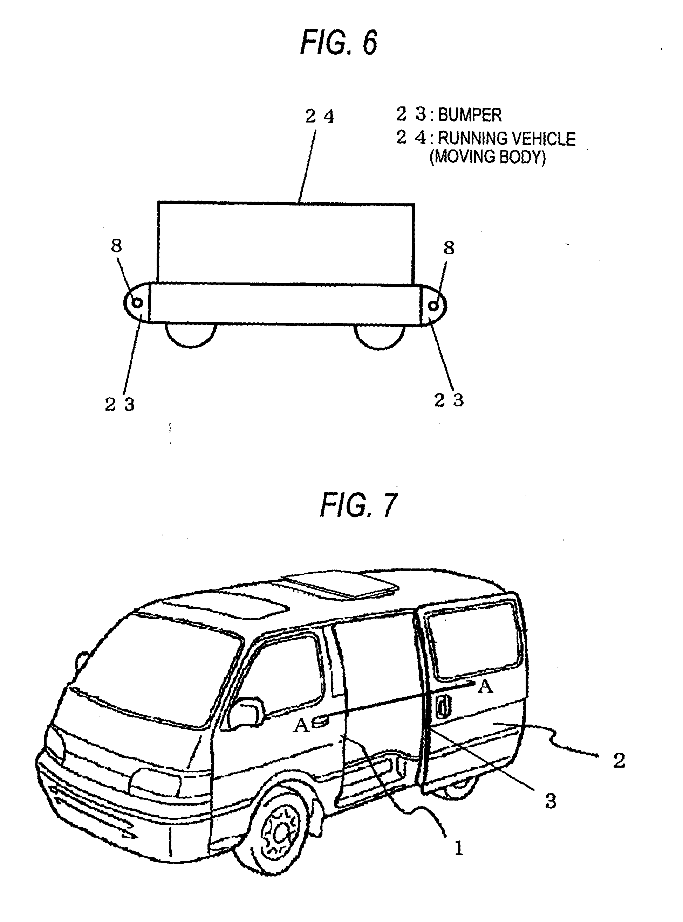

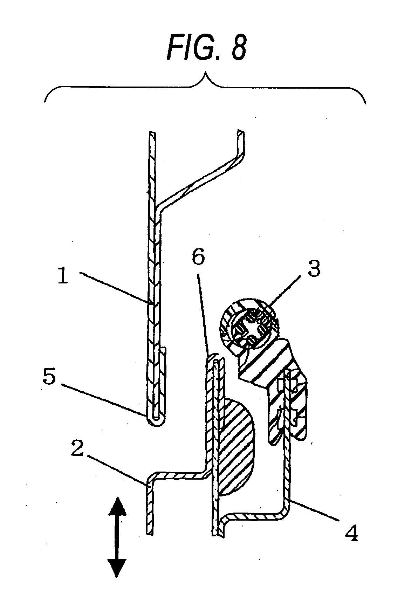

A conventional moving device will be described using Figs. 7 and 8. Fig. 7 is an external view of an automobile equipped with a sliding door, and Fig. 8 is a sectional view taken along the line A-A in Fig. 8. In the figures, reference numeral 1 denotes a body portion(a door part at a side of a front passenger seat in Fig. 7) of a vehicle body, 2 denoting a sliding door, 3 a pressure sensor, 4 a support portion for supporting the pressure sensor 3 on the sliding door 2, and 5 and 6 flanges. The pressure sensor 3 is such as to have a plurality of electrodes which are arranged to face each other, so that a contact with an object is detected through an electrical continuity made when the electrodes are made contact with each other by a pressure generated when the object makes contact with the pressure sensor 3. Note that the sliding door 2 is driven by an electric motor and a control unit for controlling the electric motor, which are both not shown.

By this configuration, when an object is caught between the pressure sensor 3 and the body 1 while the sliding door 2 is closing, a contact of the object is detected through an electrical continuity made by a mutual contact of the electrodes of the pressure sensor 3 resulting from a pressure generated by the object being so caught, and the electric motor is reversed by the control unit so as to reverse the sliding door, so that the object is released from the caught condition (refer to Patent Document No. 1).

In addition, as another conventional moving device, there is a moving device in which a pressure sensor such as one described above is provided at the periphery of a tailgate of an automobile, and when the pressure sensor detects that an object is caught between the pressure sensor and a body while the tailgate is being closed with an electric motor, the electric motor is reversed so as to reverse the tailgate, so that the object is released from the caught condition (refer to Patent Document No. 2).
(Patent Document No. 1)
JP-A-2002-235480
(Patent Document No. 2)
JP-A-2002-322875

However, in the conventional moving device described in Patent Document No. 1, the object that makes contact with the pressure sensor is soft like the hand of a human body, since the object is pressed to be deformed when the pressure sensor 3 makes contact with the object in the middle of the closure of the sliding door, a sufficient pressure is not applied to the pressure sensor 3, leading to the occurrence of a situation where the door closing operation continues with no detection of contact with the object. This situation becomes more remarkable as the flange 6 becomes taller since the object has to receive a larger pressure from the flange 6.

Due to this, to avoid the catching of the object between the pressure sensor 3 and the sliding door 2 and the body 1 while the closing operation of the door continues as happening, the object has to be removed from the pressure sensor 3 before the object is so caught. However, since the sliding door 2 continues the closing operation even after the removal of the object until the pressure sensor 3 detects a contact, for example, in a case where a human body exists in the vicinity of the sliding door 2, even in the event that the hand is removed from the pressure sensor 3, there has existed a problem that another part of the human body makes unnecessary contact with the sliding door or is caught thereby.

In addition, in the conventional moving device described in Patent Document No. 2, for example, when a door closing operation is started in such a state that an object such as the hand of the human body is in contact with the periphery of the tailgate, in the event that the contact location is in the vicinity of an upper part of the tailgate, that is, a location near the center of rotation, since the moving speed is slow, a sufficient pressure to cause the electrodes of the pressure sensor to make contact with each other is not applied as long as the hand is unnaturally pressed against the door, leading to the occurrence of a situation where the door closing operation continues while the pressure sensor cannot detect the contact with the hand.

Due to this, to avoid the catching of the object between the body and the pressure sensor, as with the conventional moving device described in Patent Document No. 1, while the object may be removed from the pressure sensor before it is so caught, since the tailgate continues the door closing operation even after the removal of the object as long as the pressure sensor does not detect the contact, for example, when the human body exists under the tailgate being closed, even in the event that the hand is removed from the pressure sensor, there has existed a problem that the head or the like of the human body is unnecessarily struck by the tailgate.

The invention was made with a view to solving these conventional problems, and an object thereof is to provide a moving device which safely controls a moving body even when an object to be made contact with is soft and the speed of the moving body is slow.

In addition, in recent years, equipment is increasing in which a moving body is automatically opened and closed by means of a drive source such as a motor. While doors of elevators and entrance and exit doors of buildings are well known as the equipment and systems of this type, in recent years, there is an increasing tendency that depending on models of automobiles, a heavy sliding door or rear transverse door is biased by a motor to be opened and closed via not a manual operation but a switch operation. As the background for this tendency, it is raised that preferences of users are diversified such that the demand of such users is shifted from sedans; which have constituted the main portion of the demand, to station wagons or van-type passenger vehicles and recreational vehicles. In addition, there is also an increasing tendency that female drivers drive vehicles of such types which are tall in height, and the difficulty they experience when attempting to manually open and close a heavy sliding door or a tailgate which is opened to a high position constitutes one of the background reasons.

Conventionally, various systems are known as a moving body opening and closing control system of this type, and for example, an example is described in which a conductive rubber switch sensor for detecting the catching of an object is provided on an automatic tailgate of an automobile (for example, refer to Patent Document No. 3).

In addition, an example is described in which a conductive rubber switch sensor for detecting the catching of an object is provided on an automatic sliding door of an automobile (for example, refer to Patent Document No. 4).

In either of the examples, when a door biased by a motor is closed, in the event that part of the human body or a foreign matter is caught between the door and the body, the catching is detected to thereby open the door.

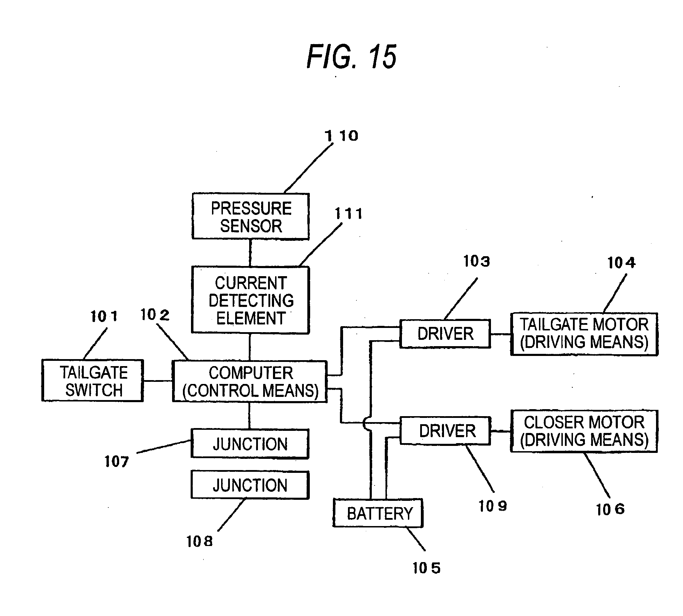

As a control circuit in these conventional moving body opening and closing control system, there exists, for example, a circuit configuration shown in Fig. 15. A tailgate switch 101 is provided at a driver's seat of a vehicle or an ignition key, and a tailgate opening or closing operation command is sent to a computer 102 as a control means via a wire or radio wave. Receiving the operation command from the tailgate switch 101, the computer 102 drives a tailgate motor 104 forward or backward or stops it via a driver 103. The driver 103 is fed from a battery 105 to drive the tailgate motor 104.

In addition, a closer assembly for drawing in the door for closure is disposed on the side of the vehicle. The closer assembly is made up of a closer motor 106 as a drive means and a pair of junctions 107, 108. The junctions 107, 108 are provided so as to be connected to each other just before the tailgate is rotated downward to be closed completely. The junction 107 is connected to the computer 102, and a signal generated when the junction 107 and the junction 108 are connected to each other is inputted into the computer 102. Then, the computer 102 stops the tailgate motor 104 via the driver 103 and drives the closer motor 106 via another driver 109. The closer motor 106 moves the tailgate to a fully closed position and locks it thereat via a locking means which constitutes the closer assembly.

By the configuration that has been described heretofore, a configuration of the vehicle can be realized in which the tailgate is rotated by the tailgate motor 104 and the closer motor 106 only through the operation of the tailgate switch 101 so that the tailgate is automatically opened and closed.

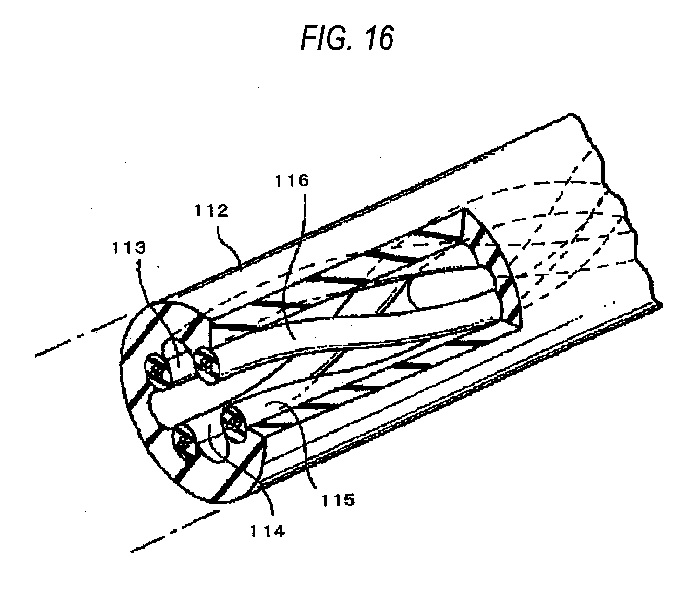

In addition, in this related art, a pressure sensor 110 is provided for detecting the catching of a foreign matter between the tailgate and the body, and the result of the detection is inputted into the computer 102 via a current detection element 111. A sensor using a conductive rubber, which is shown in Fig. 16, is made use of as the pressure sensor 110. The pressure sensor 110 has a circular cross section and is made up of a jacket portion 112 made of an insulating elastic material such as a rubber and a soft synthetic resin material and four electrode wires 113, 114, 115, 116 which are disposed along the longitudinal direction in a substantially spiral fashion. By the configuration that has been described above, when the jacket portion 112 is elastically deformed, the electrode wires 113 to 116 deflect to make contact with each other, whereby an electrical continuity is established.
(Patent Document No. 3)
JP-A-2002-242535
(Patent Document No. 4)
JP-A-2002-235480

In these conventional moving body opening and closing control systems, however, there remains a trouble resulting when the tailgate is opened. Namely, accidents could not be avoided by the tailgates in which a human body collides with the tailgate and in which the tailgate collides with a wall or ceiling of a structure such as a building while a tailgate opening operation is performed. This is because the conventional pressure sensors are constructed so as to be switched on only when the sensors themselves are pressurized so hard that the jackets are collapsed and the internal electrodes are caused to make contact with each other. Namely, the pressure sensor that is provided at a position which faces the body when the tailgate is closed can detect a catching of an object (a catching of an object that occurs between the tailgate and the body) only in the door closing direction, and with a contact occurring on an opposite side of the tailgate on which no sensor is installed when the tailgate is opened, no pressure is applied to the sensor, and hence as a matter of fact, nothing can be done for such a contact. In addition, since the pressure sensor 110 and the computer 102 are supplied with power from the battery 105, there is caused a problem that no control is implemented on the suppression of dark current (power that is consumed while the engine is stopped) when the engine is deactivated.

The invention was made with a view to solving these conventional problems and an object thereof is to provide a moving body opening and closing control system which can ensure the detection of collision of an object against a door and catching of an object between the door and a body of the vehicle when the door is both opened and closed while suppressing dark current.

### <Disclosure of the Invention>

With a view to solving the problems, the invention is such as to stop the movement of a moving body or control a driving means in such a manner as to reverse the moving direction of the moving body when an object detecting means provided on the moving body detects a contact of an object or detects a removal of the object. By this configuration, for example, even in the event that a contact of an object cannot be detected in the middle of a closing operation of the moving body due to the object to be made contact with being soft and/or the speed of the moving body being slow, since, when the a removal of the object is detected by the object detecting means, the movement of the moving body is stopped or the moving direction of the moving body is reversed, the safety is increased.

In addition, with a view to attaining the object, a moving body opening and closing control system of the invention is configured to include a piezoelectric sensor which is flexible and which takes the form of a cable, wherein in a state in which an engine is stopped, the feeding of the piezoelectric sensor is stopped, and the energization of the sensor is started at least when an opening operation is started, and the output of the sensor is monitored during both an opening operation and a closing operation.

By this configuration, the detection of collision of an object against a door and catching of an object between the door and a body of the vehicle when the door is both opened and closed while suppressing dark current is ensured by detecting vibrations of the door by a piezoelectric sensor which is flexible and which takes the form of a cable.

### <Brief Description of the Drawings>

Fig. 1 is a sectional view of a moving device according to Embodiment 1 of the invention taken along the line A-A in Fig. 7,
Fig. 2(a) is a diagram showing the configuration of a piezoelectric sensor of the moving device,
Fig. 2(b) is a cross-sectional view taken along the line B-B in Fig. 2(a),
Fig. 3 is a block diagram of the moving device,
Fig. 4 is a characteristic diagram showing an output signal V from the piezoelectric sensor, a detection output J of a detecting portion and an application voltage Vm to a driving means which are all generated when detecting a contact of an object in the moving device,
Fig. 5 is a characteristic diagram showing an output signal V from the piezoelectric sensor, a detection output J of the detecting portion and an application voltage Vm to the driving means which are all generated when detecting a removal of the object in the moving device,
Fig. 6 is an external view showing a moving device according to Embodiment 2 of the invention,
Fig. 7 is an external view of an automobile equipped with a sliding door as a conventional moving device,
Fig. 8 is a sectional view of the conventional moving device taken along the line A-A in Fig. 7,
Fig. 9 is a perspective view of a moving body opening and closing control system according to Embodiment 4 of the invention,
Fig. 10 is a perspective view showing a state in which the system is opened,
Fig. 11 is a sectional view of a main part which shows a state in which a sensor of the system is actually installed,
Fig. 12 is a partial perspective view showing a detailed configuration of a piezoelectric sensor of the system,
Fig. 13 is a block diagram which shows the system configuration of the system,
Fig. 14 is a timing chart of the system,
Fig. 15 is a block diagram showing the system configuration of a conventional moving body opening and closing control system,
Fig. 16 is a partial perspective view showing a detailed configuration of a sensor of the conventional moving body opening and closing control system,
Fig. 17 is a sectional view of a main part which shows a state in which a sensor is actually installed according to Embodiment 5 of the invention, and
Fig. 18 is a perspective view of a moving body opening and closing control system according to Embodiment 6 of the invention.

Note that in the figures, reference numeral 2 denotes a sliding door (a moving body), 8 denoting an object detecting means, 9 a piezoelectric sensor, 17 a detecting portion, 20 a driving means, 21 an alarming means, 22 a control means, 23 a bumper, 24 a running vehicle (a moving body), 101 a tailgate switch, 118 a tailgate, 126 a bracket, 128 a protector 129 a piezoelectric sensor and 135 a control unit.

### <Best Mode for Carrying out the Invention>

With a view to solving the problems, according to a first aspect of the invention, there is provided a moving device which is adapted to stop the movement of a moving body or control a driving means in such a manner as to reverse the moving direction of the moving body when an object detecting means provided on the moving body detects a contact of an object or detects a removal of the object. By this configuration, for example, even in the event that a contact of an object cannot be detected in the middle of a closing operation of the moving body due to the object to be made contact with being soft and/or the speed of the moving body being slow, since, when the a removal of the object is detected by the object detecting means, the movement of the moving body is stopped or the moving direction of the moving body is reversed, the safety is increased.

In addition, according to a second aspect of the invention, there is provided a moving device as set forth in the first aspect of the invention, wherein the object detecting means includes a flexible piezoelectric sensor and a detecting portion for detecting a contact or removal of an object based on an output signal of the piezoelectric sensor, and since the flexible piezoelectric sensor is used, there occurs no such case as with the conventional electrode contact type pressure sensor in which an erroneous detection is caused by a contact of the electrodes occurring when the sensor is bent, and since the flexible piezoelectric sensor can be arranged freely to follow the shape of the moving body, not only can the degree of arrangement be increased but also the contact or removal of the object can be detected even at the bent portion, and hence the reliability is increased.

In addition, according to a third aspect of the invention, there is provided a moving device as set forth in the second aspect of the invention, wherein the detecting portion determines that either a contact or removal of an object occurs when the amplitude of an output signal of the piezoelectric sensor overpasses a set range which is set in advance, and since it is determined that either a contact or removal of an object occurs when the amplitude of the output signal of the piezoelectric sensor overpasses the set range which is set in advance even when the polarity of the output signal of the piezoelectric sensor varies depending on conditions on a bent state and polarized direction of the piezoelectric sensor, electrode allocation (which to be made a reference potential) and piezoelectric sensor support direction, the safety control of the moving body is made possible without being affected by those conditions.

In addition, according to a fourth aspect of the invention, there is provided a moving device as set forth in any of the first to third aspects of the invention, wherein the moving body is at least one of such openable and closable doors as automotive sliding door, tailgate, trunk lid, window of a type that can ascend and descend and sunroof, openable and closable wings on a cargo deck of a truck, and doors and shutters of elevators and buildings, and a contact or removal of an object with or from these openable and closable doors is detected so as to control the doors in a safe fashion.

In addition, according to a fifth aspect of the invention, there is provided a moving device as set forth in any of the first to third aspects of the invention, wherein the moving body is a running vehicle having a bumper, and wherein the object detecting means is provided on the bumper of the running vehicle as the moving body, and the running of the running vehicle can be controlled in a safe fashion by detecting a contact or removal of an object with or from the bumper.

Furthermore, according to a sixth aspect of the invention, there is provided a moving device as set forth in any of the first to fifth aspects of the invention, wherein an information means is provided which informs that the driving means is to step the movement of the moving body or reverse the moving direction of the moving body, when the object detecting means detects a contact or removal of an object, and since people in the vicinity can be warned by the information, the reliability and usefulness of the system are increased.

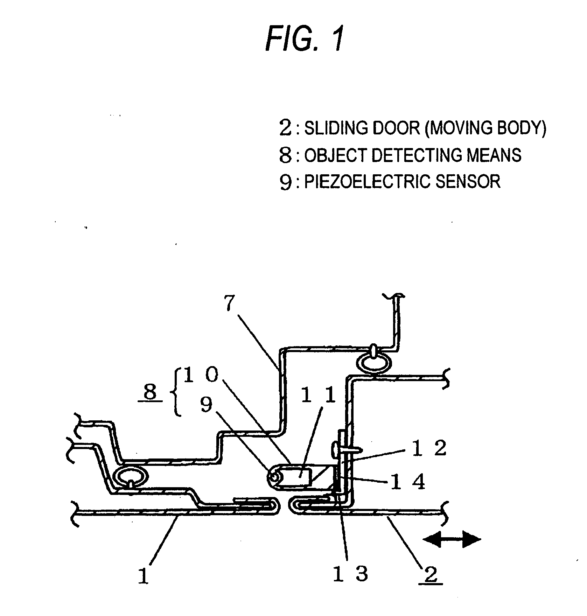

Hereinafter, Embodiments 1 to 3 of the invention will be described by reference to Figs. 1 to 7.

### (Embodiment 1)

An invention according to Embodiment 1 will be described by reference to Figs. 1 to 5 and 7. In Embodiment 1, a moving device of the invention will be described as being applied to a sliding door of an automobile.

Fig. 1 is a sectional view of a moving device of Embodiment 1 at a position corresponding to the line A-A in Fig. 7. Fig. 1 shows a state in which a sliding door is closed completely, and an upper side of the drawing denotes an inside of a vehicle, whereas a lower side thereof denotes an outside thereof

Firstly, the configuration of the moving device of Embodiment 1 will be as follows. In Fig. 1, reference numeral 1 denotes a body portion of a vehicle body (an end portion of a door at a side of a front passenger seat in Fig. 7), and 2 denotes a sliding door as a moving body. Reference numeral 7 denotes a main structure of the vehicle body and 8 denotes a contact detecting means, which has a piezoelectric sensor 9 which is flexible and which takes the form of a cable and a support portion 10 which supports the piezoelectric sensor 9 and which is made of an elastic material. A synthetic rubber such as EPDM and a thermoplastic elastomer may be used as the elastic material. The piezoelectric sensor 9 is inserted in an insertion hole provided in the vicinity of a distal end of the support portion 10. when inserted, a lubricant such as zinc stearate may be applied to the surface of the insertion hole or the piezoelectric sensor 9 for facilitating the insertion.

The support portion 10 is more flexible than the piezoelectric sensor 9. In addition, by providing a hollow portion 11 in the support portion 10, the piezoelectric sensor 9 is made to deform more easily by a pressure generated when an object is brought into contact with the object detecting means 8. Note that the support portion 10 may be made more flexible than the piezoelectric sensor 9 by being formed using a foam resin or the like without providing the hollow portion 11. The support portion 10 is secured to an attachment portion 12 with, for example, a pressure sensitive adhesive double coated tape. When attached, the support portion is secured to the attachment portion 12 with the pressure sensitive adhesive double coated tape while aligning the support portion 10 with a convex guide portion 13 provided along an end portion of the attachment portion 12. The attachment portion 12 is fixed to an end portion of the sliding door 2 with machine screws. Note that a construction may be adopted in which the support portion 10 is directly fixed to the end portion of the sliding door 2 with the pressure sensitive adhesive double coated tape, and this obviates the necessity of the attachment portion 12, thereby the rationalization of the system being attained.

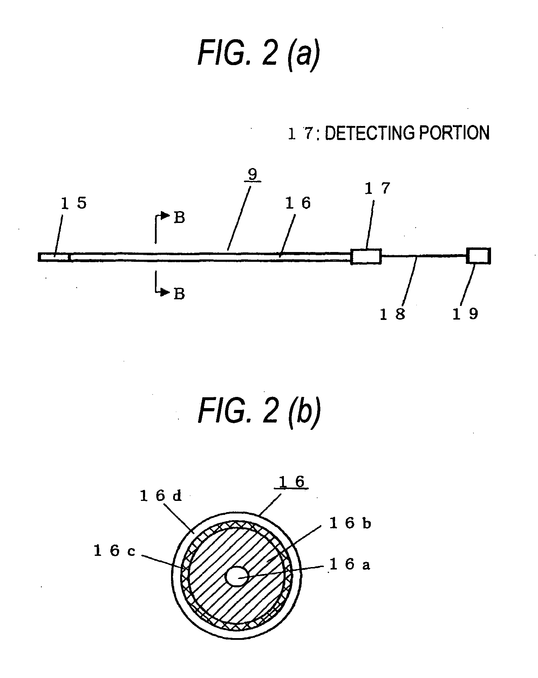

Fig. 2(a) is a diagram showing the configuration of the piezoelectric sensor 9, and Fig. 2(b) shows a cross-sectional view thereof taken along the line B-B in Fig. 2(a). As shown in Fig. 2(a), the piezoelectric sensor 9 includes a resistor encapsulated portion 15 which is provided at a distal end portion thereof and which encapsulates therein a resistor for detecting a disconnection and short circuit of the piezoelectric sensor, a sensing portion 16 taking the form of a cable, a detecting portion 17 which incorporates therein a filter, an amplifier, a comparator and a disconnection and short circuit detecting circuit, which are all not shown, a cord 18 for power supply and outputting a detection signal and a connector 19 for connection with a control means 22, which will be described later.

As shown in Fig. 2(b), the sensing portion 16 is such as to be constructed by laminating concentrically a center electrode 16a, a composite piezoelectric material layer 16b in which sintered powder of piezoelectric ceramics is mixed into a rubber elastic material, an external electrode 16c and a cover layer 16d and forming them so laminated into a cable. As the rubber elastic material, for example, a chlorinated polyethylene sheet is used. The sensing portion 16 is fabricated by the following process. Firstly, a chlorinated polyethylene sheet and (40 to 70) vol% of piezoelectric ceramic powder (here, zirconate titanate) are mixed uniformly into a sheet by a rolling process. After the sheet so formed is cut into fine pellets, the pellets so cut are extruded continuously together with the center electrode 16a to thereby form a composite piezoelectric layer 16b. Then, an artificial electrode is brought into contact with an outer side of the composite piezoelectric layer 16b, and a direct current high voltage of (5 to 10)kV/mm is applied between the center electrode 16a and the artificial electrode, so that the polarization of the composite piezoelectric material layer 16b is implemented. After the polarization, the external electrode 16c is wound around the circumference of the composite piezoelectric material layer 16b. Finally, the cover layer 16d is continuously extruded while encompassing the external electrode 16c. Since the composite piezoelectric material layer 16b is made using chlorinate polyethylene, a vulcanizing process, which is necessary for production of general synthetic rubber, becomes unnecessary.

In the resistor encapsulated portion 15, the disconnection and short circuit detecting resistor, not shown, is connected between the center electrode 16a and the external electrode 16b. In the detecting portion 17, the filter, amplifier, comparator, disconnection and short circuit detecting circuit are formed into a customized integrated circuit for installation. In addition, to counteract electrical noise, electrical noise counteracting components such as an EMI filter and a feedthrough capacitor are used at an input portion of the detecting portion 17 which is provided on a side thereof which faces the sensing portion 16 and a power supply input portion of the detection portion 17 which is provided on a side thereof which faces the cord 18 and an output portion of the detecting portion 17 from which a detection signal is outputted. In addition, outer circumferences of both the resistor encapsulated portion 15 and the detecting portion 17 are covered by a conductor material, and an electrical continuity is established between the conductor material, the external electrode 16c and a grounded side of the power supply, whereby the entirety of the piezoelectric sensor 9 is shielded.

In addition, the filter has a filtering property to extract only a specific frequency component to an output signal of the piezoelectric sensor 9 that is generated when the piezoelectric sensor 9 is deformed by a contact with an object by removing unnecessary signals attributed to vibrations of the body of an automobile from an output signal of the piezoelectric sensor 9. To determine the filtering property, an optimization may be implemented in consideration of the vibration property of the body of the automobile. To be specific, in order to remove vibrations resulting from a running engine of the automobile and the running automobile itself, as well as the opening and closing operation of doors of the automobile, it is desirable to use a low-pass filter which extracts signal components of about 10Hz or lower. In addition, a notch filter may be provided which is adapted to remove only vibration components resulting from the running engine of the automobile and the running automobile itself, as well as the opening and closing operation of doors of the automobile.

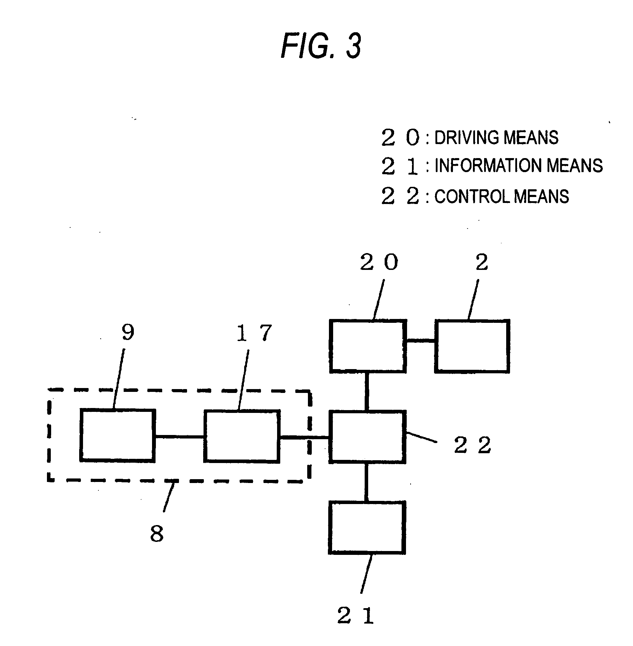

Fig. 3 is a block diagram of the moving device of Embodiment 1 of the invention. In the figure, reference numeral 20 denotes a drive means made up of an electric motor for driving the sliding door 2, 21 denoting an information means, 22 a control means for controlling the drive means 20 and the information means 21 based on an output signal of the object detecting means 8.

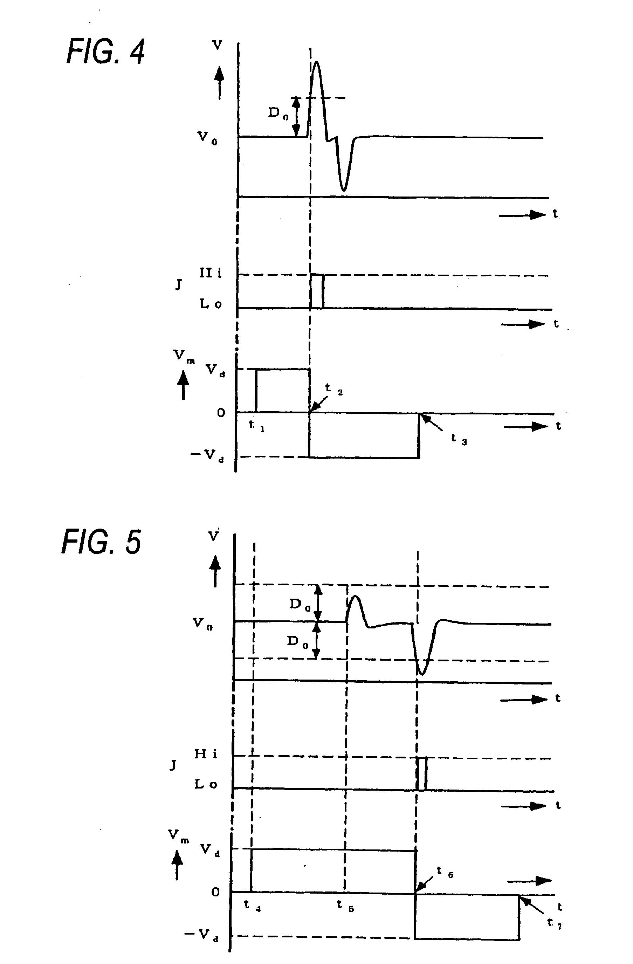

Next, the function of the moving device will be described. Fig. 4 is a characteristic diagram of the moving device of the invention of Embodiment 1 which shows an output signal V from the piezoelectric sensor 9, a detection output J of the detecting portion 17 and an application voltage Vm to the driving means 20. From the figure, when the user performs a closing operation and a voltage of Vd is applied to the driving means at time t1, the sliding door 2 starts to a closing operation. An alarm may be generated from the control means for warning when the driving means 20 performs a closing operation.

Next, when an object is brought into contact with the end portion of the electric sliding door 2 during the closing operation, the object makes contact with the object detecting means 8 provided at the end portion of the electric sliding door 2, an object pressure is applied to the support portion 10 and the piezoelectric sensor 9. Since the support portion 10 is more flexible than the piezoelectric sensor 9, the support portion 10 is compressed mainly at a location with which the object makes contact by the pressure to thereby be deformed, and the hollow portion is collapsed, whereby the piezoelectric sensor 9 is also bent mainly at a location thereof which corresponds to the location where the object makes contact with the support portion 10 to thereby be deformed.

As this occurs, as shown in Fig. 4, when a contact with an object occurs, a signal (a signal component that is larger than a reference potential V0 in Fig. 4) according to the acceleration of the deformation of the piezoelectric sensor 9 is outputted by virtue of the piezoelectric effect. As this occurs, while the deformation of the piezoelectric sensor 9 at the time of contact is slight with a configuration in which the piezoelectric sensor 9 is simply provided at the end portion of the sliding door 2, in the case of the embodiment, since the support portion 10 is made of the elastic material which is more flexible than the piezoelectric sensor 9 and furthermore the support portion 10 has the hollow portion 11 so that the support portion 10 is compressed at the time of contact, the deformation amount of the piezoelectric sensor 9 is increased. Thus, the piezoelectric sensor 9 obtains a larger deformation volume and the acceleration which is a quadratic differential value is also increased, resulting in an increase in output signal of the piezoelectric sensor 9, whereby the differentiation of a signal component resulting when a true contact is made from signal components resulting from external vibrations and electrical noise can be facilitated and the determination accuracy at the time of determination on contact is increased, an erroneous determination being thereby eliminated.

While the detecting portion 17 outputs Lo in a state in which there is no contact with an object, the detecting portion 17 determines that a contact has occurred when the amplitude in a positive direction of V from V0 (V-V0) becomes equal to or larger than D0 due to a contact with an object and outputs a signal of Hi at time t2 as a determination output. The Hi signal continues while the amplitude (V-V0) remains equal to or larger than D0.

When the Hi signal is sent from the object detecting means 8, the control means 22 stops the application of a voltage of +Vd to the driving means 20 and then applies a voltage of-Vd for a certain period of time so as to make the sliding door 2 perform an opening operation for the certain period of time to release the contact. In this case, the sliding door 2 may be made to perform the opening operation until it is opened completely. In addition, when the Hi signal is sent from the object detecting means 8, the control means 22 generates a predetermined voice signal which is stored in advance from the information means 21. As this voice signal, for example, a message is generated such as "A contact has been detected. The sliding door will be opened." Note that the information means 21 may share a speaker with a car navigation system and a car audio system.

Note that while in V in Fig. 4, a negative signal component from V0 is generated, this is an output signal generated from the piezoelectric sensor 9 when an object is removed from the object detecting means 8 as a result of an opening operation of the sliding door 2 over a certain distance due to a contact with the object having been detected. Namely, when the object is removed from the object detecting means 8, since the pressure due to the contact is eliminated, the support portion 10 which is elastically deformed restores its original shape, and at the same time, the deformed piezoelectric sensor 9 also restores its original shape. Then, when the deformed piezoelectric sensor 9 restores its original shape, an output signal whose polarity is opposite to one resulting at the time of contact with the object is generated. This is due to the property of the known piezoelectric effect.

Next, the function will be described which is to be operated when a soft object such as the hand is brought into slow contact with the object detecting means 8 and is then removed therefrom. Fig. 5 is a characteristic diagram showing an output signal V from the piezoelectric sensor, a detection output J of the detecting portion and an application voltage Vm to the driving means which are all generated when detecting the removal of the object in the moving device.

From Fig. 5, when the user performs a closing operation and a voltage of Vd is applied to the driving means at time t4, the sliding door 2 starts to perform a closing operation. An alarm may be generated from the control means 22 for warning when the driving means 20 performs a closing operation.

When the hand makes contact with the end portion of the electric sliding door 2 during a closing operation, the hand is brought into contact with the object detecting means 8, and a pressure generated by the contact with the object is applied to the support portion 10 and the piezoelectric sensor 9. As this occurs, when the soft object such as the hand is brought into slow contact with the object detecting means 8 at time t5, since the acceleration of the deformation of the piezoelectric sensor 9 is so small that, as shown in Fig. 5, there may be a case where no signal which is equal to or larger than the reference voltage D0 is generated at V. In this case, the detecting portion 17 determines that no contact is made with the object and outputs Lo, and a voltage of Vd continues to be applied to the driving means, whereby the sliding door 2 continues to operate the closing operation.

On the other hand, since the hand thereof continues to be pressed by the sliding door 2, the user realizes that an unnecessary contact is occurring and removes his or her hand from the object detecting means 8 before the hand is caught between the body 1 and the sliding door 2. As this occurs, a larger signal than V0 is generated at V, as shown in Fig. 5. This is due to the property of the known piezoelectric effect as has been described above. Here, since, when attempting to remove the hand as has been described above, in many cases, the hand is removed quickly to avoid a risk of being caught, the support portion 10, which is elastically deformed, restores its original shape drastically, and at the same time, the deformed piezoelectric sensor 9 also restores its original shape. Due to this, since the acceleration generated when the deformed piezoelectric sensor 9 restores its original shape is increased, the amplitude of a signal that is generated to a negative side from V0 is increased in proportion to the increase in acceleration, and the amplitude in a negative direction from V0 (V0-V) reaches or exceeds D0.

The detecting portion 17 determines that the object has been removed when the amplitude of V in the negative direction from V0 (V0-V) reaches or exceeds D0 due to the removal of the hand and outputs a signal of Hi as a determination output. The Hi signal continues to be outputted while the amplitude (V0-V remains at D0 or lower.

When there is sent the Hi signal, the control means 22 stops the application of the voltage of +Vd to the driving means 20 but applies the voltage of-Vd for a certain period of time so as to make the sliding door 2 operated an opening operation for the certain period of time. In this case, the sliding door 2 may be made to operate the opening operation until it is fully opened. In addition, when the Hi signal is sent from the object detecting means 8, the control means 22 causes the information means 21 to generate a similar predetermined voice signal to that described above.

Note that since a large acceleration is applied to the piezoelectric sensor 9 when a pressure is applied to the object detecting means 8 by intentionally pressing the hand against the object detecting means before the hand is caught, the detecting portion 17 detects a contact with the object, and as with the aforesaid case, the sliding door 2 is controlled for reverse movement.

In addition, in the event that the removal of the object is not detected or the object makes contact with the body 1 side while the sliding door 2 is performing the closing operation, while the object is caught between the body 1 and the sliding door 2 by the continuation of the closing operation by the sliding door 2, a pressure applied to the object detecting means 8 as this occurs is by an inertial force by the weight of the sliding door 2, the pressure becomes larger than a pressure applied by the contact of the object while the sliding door 2 is performing the closing operation. Due to this, the accelerations generated by the deformation of the object detecting means 8 and the piezoelectric sensor 9 are increased, and since a signal in a sufficient size which has an amplitude equal to or larger than D0 in Fig. 4 is outputted from the piezoelectric sensor 9, it is ensured that the detecting portion 17 can detect the contact of the object. An opening operation that is to be performed after the detection of the contact is similar to that described above.

In addition, the detecting portion 17 forms an electric circuit of a system from power supply to a predetermined resistor, to the center electrode 16a, to the disconnection and short circuit detecting resistor and to the external electrode 16c (ground), and the center electrode 16a is a voltage value resulting from the division of supply voltage by the resistor and the disconnection and short circuit detecting resistor. Consequently, when at least one of the center electrode 16a and the external electrode 16c is disconnected, the voltage Vi of an input portion of the detecting portion 17 to which the center electrode 16a is connected becomes equal to the supply voltage. In addition, when the center electrode 16a and the external electrode 16c short-circuit, Vi takes a ground potential.

The disconnection and short circuit detecting circuit installed in the detecting portion 17 detects the disconnection and short circuit of the piezoelectric circuit by detecting the behavior of the Vi, and when a disconnection or short circuit is so detected, the detecting portion 17 outputs continuously the Hi signal. Then, when the Hi signal continues to be inputted into the control means 22 from the detecting portion 17 for a predetermined period of time, the control means 22 determines that an abnormal disconnection or short circuit has occurred in the piezoelectric sensor 9, indicates such an abnormality on, for example, the instrument panel in front of the driver's seat, prohibits the energization of the driving means 20 and switches over the operation of the sliding door 2 to a manual operation in which the sliding door 2 can be opened and closed manually.

By the functions that have been described heretofore, according to the moving device of Embodiment 1, even in the event that the contact of the object cannot be detected in the middle of the closing operation of the sliding door 2 (the moving body) due to the object in contact being soft and/or the speed of the moving body being slow, since the driving of the sliding door 2 (the moving body) is controlled when the removal of the object is detected by the object detecting means 8, the safety is increased.

In addition, since the flexible piezoelectric sensor 9 is used, there occurs no such case, as with the conventional electrode contact type pressure sensor, in which an erroneous detection is made due to the contact of the electrodes caused by the bending of the sensor, and since the piezoelectric sensor 9 can be arranged freely according to the shape of the sliding door 2 (the moving body), the degree of freedom in design is increased. In addition, since the contact or removal of the object can be detected even by a bent portion thereof, the reliability is increased.

In addition, since the user and people in the vicinity can be warned by informing that the driving means stops the movement of the moving body or reverses the moving direction of the moving body when the object detecting means detects a contact or removal of an object, the reliability and usefulness of the system are increased further.

Note that while in Embodiment 1, the moving body is the sliding door of the automobile, the moving body may be at least one of such openable and closable doors as automotive sliding door, tailgate, trunk lid, window of a type that can ascend and descend and sunroof, openable and closable wings on a cargo deck of a truck, and doors and shutters of elevators and buildings, and a contact or removal of an object with or from these openable and closable doors is detected to thereby control the driving of the openable and closable door in a safe fashion.

In addition, a configuration may be adopted in which the detecting portion detects a contact or removal of an object based on the polarity and amplitude of an output signal from the piezoelectric sensor and outputs different detection signals for contact and removal. According to this configuration, the driving method of the moving body can be diversified so as to increase further conveniences in handling and safety as seen in, for example, a configuration in which when a contact of an object is detected, the moving body is driven reversely by the control means so as to perform an opening operation until the moving body is opened completely, and when a removal of an object is detected, after the moving body is reversed or stopped for a predetermined period of time by the control means, the closing operation is resumed or a configuration in which a contact of an object is detected before the moving body starts all opening operation, no opening operation of the moving body is performed until a removal of the object is detected.

In addition, while, in Embodiment 1, the driving means is controlled so as to reverse the moving direction of the moving body when the object detecting means detects a contact with an object or a removal of an object that has been in contact, a configuration may be adopted in which the driving means is controlled so as to stop the movement of the moving body when the object detecting means detects a contact with an object or a removal of an object that has been in contact.

In addition, while, in Embodiment 1, when the sliding door 2 makes contact with an object while performing a closing operation, the driving of the sliding door 2 is constructed to be controlled safely, a configuration may be adopted in which an object detecting means 8 is also attached to a rear end portion of the sliding door 2, so that a similar safe control to that performed during the closing operation can be performed even when the sliding door 2 makes contact with an object at the rear end portion thereof while performing an opening operation, whereby the similar safe control is implemented also when the openable and closable door makes contact with an object while performing the opening operation.

### (Embodiment 2)

An invention according to Embodiment 2 will be described by reference to Fig. 6. Fig. 6 is an external view showing a moving device of Embodiment 2. Points in which Embodiment 2 differs from Embodiment 1 are that a moving body is a running vehicle 24 having bumpers 23 and that the object detecting means 8 is provided in the bumpers 23.

In this configuration, when the object detecting means 8 detects a contact of an object or a removal of the object that has been in contact, the running of the running vehicle 24 is stopped or the running direction of the running vehicle 24 is reversed for a predetermined period of time. In addition, when a contact of an object is detected before the running vehicle 24 starts to run, a configuration may be adopted in which the running of the running vehicle 24 continues to be stopped until a removal of the object is detected: According to the configurations, the running of the running vehicle 24 can be controlled safely by detecting the contact or removal of the object with or from the bumpers 23.

Note that this embodiment can be applied to all types of running vehicles on which bumpers can be fitted such as automobiles, unmanned transport vehicles and various types of self-propelled carts such as golf carts.

### (Embodiment 3)

An invention according to Embodiment 3 will be described below. A point in which this embodiment differs from Embodiments 1, 2 resides in that the detecting portion 17 determines that either a contact or a removal of an object has occurred when the amplitude of an output signal from the piezoelectric sensor 9 exceeds a set range which is set in advance. To be specific, in the characteristic chart of V in Fig. 5, determining that either a contact or a removal of an object has occurred when an absolute value |V-V0| of the amplitude of V from V0, a signal of Hi is outputted from the object detecting means 8 as a determination output. As an actual circuit, a window comparator may be used to perform the aforesaid process.

With a contact or removal, the polarity of V relative to V0 may vary depending on conditions on a bent state and polarized direction of the piezoelectric sensor, electrode allocation (which to be made a reference potential) and piezoelectric sensor support direction, and in order to cope with this, the detecting portion 17 determines that either a contact or removal has occurred based on the absolute value of the amplitude of V from V0, whereby although a contact and a removal cannot be differentiated for detection, the safe control of the moving body can be implemented without being affected the aforesaid conditions.

While, in Embodiments 1 to 3, the running vehicle having the openable and closable doors and the bumpers is used as the moving body, the invention can be applied to other types of moving bodies such as various types of drive portions of machine tools and robot arms, and stowage systems that can be raised and lowered.

In addition, according to a seventh aspect of the invention, there is provided a moving body opening and closing control system including a moving body that is constructed to be opened and closed freely, a sensor that is attached to the moving body for detecting vibrations generated by a contact of an object or catching of an object and a control unit for controlling opening and closing operations of the moving body based on an output signal from the sensor, wherein the control unit starts an energization to the sensor at least with an opening operation of the moving body, and wherein when a contact of an object is detected by the sensor during a closing operation, the closing operation of the moving body is stopped or the moving body is opened, whereby a collision of an object against the door and a catching thereof by the door when the door is being opened and closed can be detected by the sensor.

According to an eighth aspect of the invention, there is provided a moving body opening and closing control system as set forth in the seventh aspect of the invention, wherein a piezoelectric sensor which is flexible and which takes the form of a cable is used as the sensor which is attached to the moving body for detecting vibrations generated by a contact of an object or catching of an object, whereby the detection of a collision of an object against the door and a catching thereof by the door when the door is being opened and closed can be ensured.

According to a ninth aspect of the invention, there is provided a moving body opening and closing control system as set forth in the seventh aspect of the invention, wherein when the sensor detects vibrations or catching in the middle of an opening operation of the moving body, the movement of the moving body is stopped or the moving body is closed, whereby the detection of a collision of an object against the door and a catching thereof by the door while the door is being opened can be ensured.

According to a tenth aspect of the invention, there is provided a moving body opening and closing control system as set forth in the seventh aspect of the invention, wherein the energization to the sensor is continued while the moving body is in an opened state, whereby the detection by the sensor of a collision of an object against the door and a catching thereof by the door that can be generated at any timing when the door is being closed can be ensured while suppressing a dark current.

According to an eleventh aspect of the invention, there is provided a moving body opening and closing control system including a moving body that is constructed to be opened and closed freely, a sensor that is attached at a fixing portion that is opposite to the moving body for detecting a catching caused by the moving body and a control unit for controlling the moving body and the sensor, wherein the control unit starts an energization to the sensor at least with an opening operation of the moving body, whereby the detection of a collision of an object against the door and a catching thereof by the door when the door is being opened and closed can be implemented by the sensor.

According to a twelfth aspect of the invention, there is provided a moving body opening and closing control system as set forth in the eleventh aspect of the invention, wherein a piezoelectric sensor which is flexible and which takes the form of a cable is used as the sensor, whereby the flexible and cable-like piezoelectric sensor detects vibrations of the door, so that the detection of a collision of an object against the door and a catching thereof by the door when the door is being opened and closed can be ensured.

According to a thirteenth aspect of the invention, there is provided a moving body opening and closing control system as set forth in the eleventh aspect of the invention, wherein the energization to the sensor is continued while the moving body is in an opened state, whereby the detection by the sensor of a collision of an object against the door and a catching thereof by the door that can be generated at any timing when the door is being closed can be ensured while suppressing a dark current.

According to a fourteenth aspect of the invention, there is provided a moving body opening and closing control system including a moving body that is constructed to be opened and closed freely, a sensor that is attached to the moving body for detecting vibrations generated by a contact of an object or catching of an object and a control unit for controlling the moving body and the sensor, wherein the control unit has a function to detect an instantaneous disconnection of a power supply, discontinues the movement of the moving body or reduces the speed thereof when the instantaneous disconnection of the power supply is detected and causes the moving body to normally operate after the power supply is restored and a predetermined time has been counted since then, whereby the operation of the sensor can be ensured.

Hereinafter, referring to the drawings, Embodiments 4 to 6 of the invention will be described.

### (Embodiment 4)

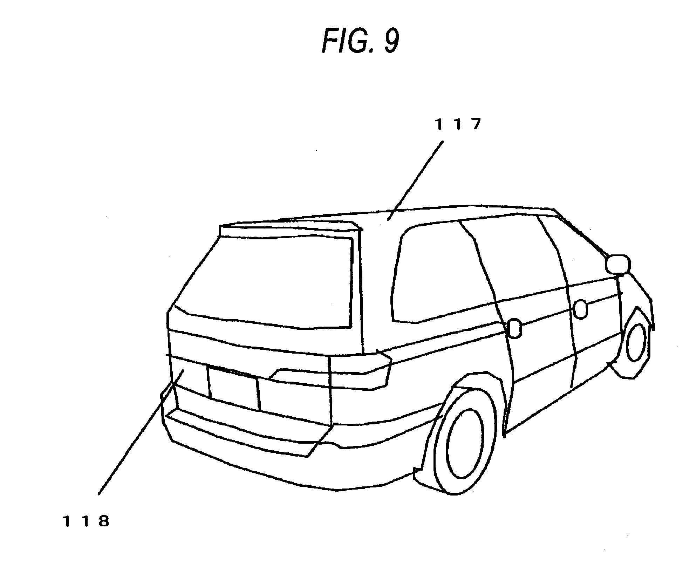

Figs. 9 to 13 show a contact detection system of Embodiment 4 and application examples thereof.

Fig. 9 is a perspective view of a vehicle which is fitted with an automotive tailgate as a moving body of the invention. A tailgate 118 is provided at the rear of a body 117 in such a manner as to be opened and closed freely.

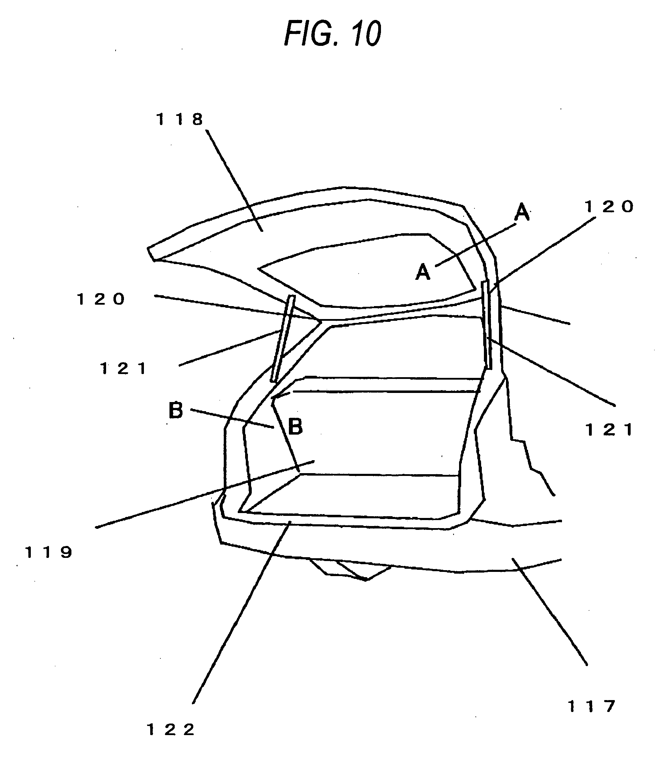

Fig. 10 is a perspective view showing a state in which the tailgate 118 is opened. When the tailgate 118 is opened, a luggage room (a luggage compartment) is formed within a passenger compartment, so that luggage can be placed in and out of the luggage compartment. The tailgate 118 is rotatably supported by a hinge (not shown) in the vicinity 120 of an upper end thereof and is rotated by a tailgate motor (not shown). The tailgate 118 is supported by a damper 121. The damper 121 is made up of a cylinder and a piston and is provided for smooth opening and closing of the tailgate 118 while absorbing shocks associated with the opening and closing thereof An opening 122 in the body 117 which faces the tailgate 118 is generally referred to as a rear opening that is to be closed by the tailgate 118 when it shields the passenger compartment.

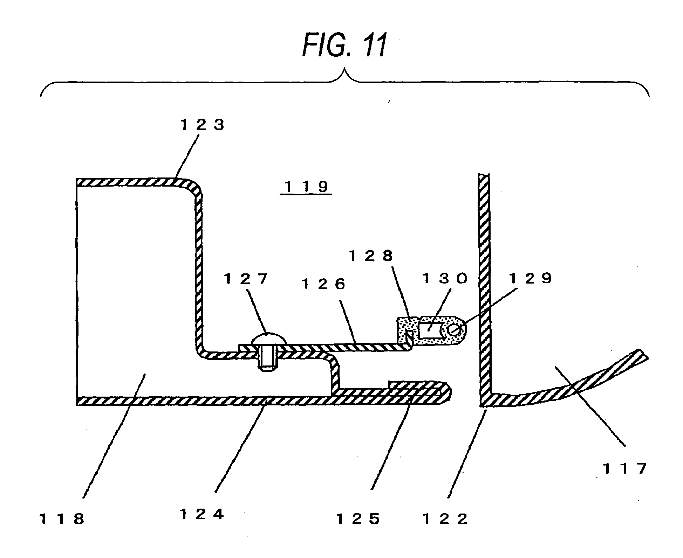

Fig. 11 is a sectional view of an outer circumferential portion of the tailgate 118 taken along the line A-A in Fig. 10 and shows a construction in which a sensor is actually installed. The tailgate 118 is formed by two sheets metal. They are an inner panel 123 that is situated on the luggage compartment 19 side and an outer panel 124 that is situated on the outside of the vehicle. The two panels are constructed such that an end portion of the outer panel 124 is folded back at an outer edge portion 125 thereof so as to mesh with the inner panel 123.

While a circumferential edge portion of the tailgate 118 is formed into something like a thin plate which is not thick as shown in the figure by the construction described above, the inner panel 123 is raised at the center of the tailgate 118 in such a manner as to swell toward the luggage compartment 119 side and hence the tailgate 118 has a certain thickness. A sensor is mounted in a location where the thickness is provided.

A bracket 126 is secured to the thick portion of the tailgate 118 with a machine screw 127, and a protector 128 is held at one end thereof. A piezoelectric sensor 129 is disposed at a distal end of the protector 128. The piezoelectric sensor 129 is a piezoelectric sensor which is flexible and which takes the form of a cable, the details of which will be described later. The protector 128 elastically supports this piezoelectric sensor 129 and is made of a rubber such as EPDM which is more flexible than the piezoelectric sensor 129 or a resin such as elastomer which has elasticity. In the embodiment, a hollow portion 130 is provided and is formed so as to facilitate the deflection of the sensor so that the piezoelectric sensor 129 can detect a catching of a foreign matter and a collision thereof against the tailgate 118 with good sensitivity when they occur. The hollow portion 130 can be substituted by rubber and foamed resin as required.

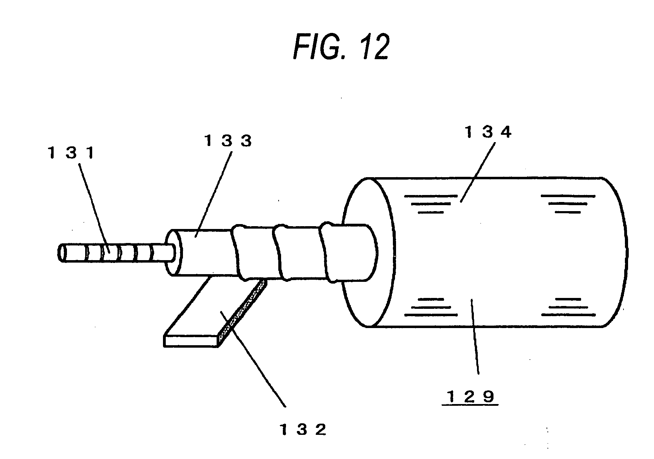

Fig. 12 is a partially cutaway perspective view showing the details of the piezoelectric sensor 129. The piezoelectric sensor 129 is made up of a center electrode 131 which functions as an electrode from which a signal is derived, an external electrode 132, a composite piezoelectric material 133 between the two electrodes and a cover layer 134 and is formed into a cable whose outside diameter is on the order of 2.5mm.

Then, the composite piezoelectric material 133 is such as to be formed using a composite piezoelectric material made by mixing chlorinated polyethylene with piezoelectric ceramic powder. This piezoelectric sensor 129 has high sensitivity and good durability and provides good production efficiency, and in combination with the configuration of the protector 128 that has been described above, the piezoelectric sensor 129 exhibits its natural function sufficiently to thereby implement a good contact detection.

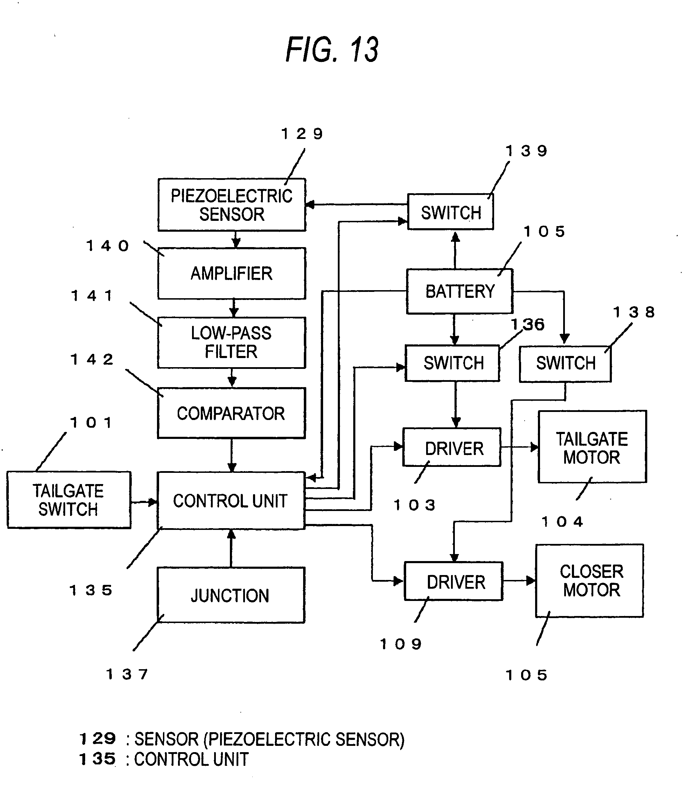

Fig. 13 is a block diagram showing the configuration of a control system relating to the invention. A tailgate switch 101 is provided at the driver's seat or an ignition key of the vehicle and sends out to a control unit 135 a command on opening and closing operations of the tailgate by wire or radio wave. The control unit 135 is made up of a microcomputer or the like and receives an operation command from the tailgate switch 101 to thereby drive a tailgate motor 104 forward and backward or stops the same via a driver 103. The driver 103 is fed from a battery 105 via a switch 136 to thereby drive the tailgate motor 104. In addition, the switch 136 is controlled so as to be on and off by the control unit 13 5.

Additionally, a closer assembly is disposed on the vehicle side which draws in the door for closure. The closer assembly is made up of a closer motor 106 as a drive means and a junction 137. The junction 137 output a closer signal to the control unit 135 prior to a complete closure of the tailgate resulting from a downward rotation of the tailgate. The control unit 135 can detect that the tailgate has moved to a closed position by observing the signal.

Then, the control unit 135 stops the tailgate motor 104 via the driver 103 and drives the closer motor 106 via another driver 109. The closer motor 106 moves the tailgate to a completely closed position and locks it thereat via a locking means which makes up the closer assembly. The driver 109 is also fed from the battery 105 via a switch 138 to drive the closer motor 106.

The battery 105 further feeds the piezoelectric sensor 129 via a switch 139, as well as the control unit 135, of course. By these switches 136, 138, 139 the control unit 135 can freely control the feeding to the piezoelectric sensor 129, the tailgate motor 104 and the closer motor 106.

An output signal of the piezoelectric sensor 129 is amplified at a predetermined magnification by an amplifier 140 and is inputted into a low-pass filter 141 to take out only a contact signal. Then, after noise is removed therefrom, a comparison with a threshold is implemented, and after whether or not there has occurred a catching and a collision is determined, the signal is inputted into the control unit 135.

By the configuration that has been described heretofore, the control unit 135 can realize a configuration in which the tailgate is rotated by virtue of drive forces of the tailgate motor 104 and the closer motor 106 only through the operation of the tailgate switch 101 so as to open and close the tailgate in an automatic fashion. In addition, while the low-pass filter has a large time constant and hence an unstable period continues slightly at the time of activation, according to the configuration, since the low-pass filter is activated by the sensor at the same time that the tailgate is operated to be opened, a catching which needs to be detected in an ensured fashion when the tailgate is closed can be implemented in a safe fashion.

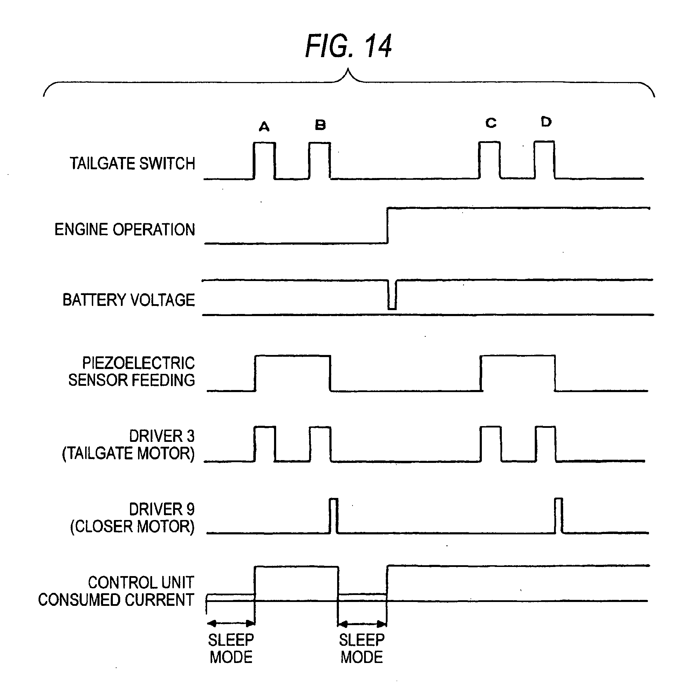

Fig. 14 is a time chart which shows which controls the control unit 135 performs in the system.

The tailgate switch is operated independently of the operation of the engine. Namely, even when the ignition key is removed, the tailgate switch commands opening A and closing B. As this occurs, in order to suppress the dark current, the control unit is in, for example, a sleep mode to thereby suppress the consumed power is suppressed to on the order of 1mA. Then, the control unit is shifted to a normal operation mode with an opening command sent from the tailgate switch.

The control unit, which so starts the normal operation, starts feeding the sensor. In addition, the control unit drives the tailgate motor in an opening direction via the driver 103. by energizing the sensor when the tailgate is opened, and in particular, by using the piezoelectric sensor taking the form of a cable as the sensor, even when the tailgate is brought into contact with the human body, a foreign matter and a ceiling that is part of a building in the middle of opening motion, such a contact can be detected. Namely, since the tailgate vibrates largely due to the contact, the piezoelectric sensor of the type which can detect vibrations can detect the vibration thereof. In such a case, since the control unit stops the tailgate motor via the driver 103 to thereby disturb a further movement of the tailgate in the opening direction, it is extremely safe.

After the tailgate is opened with no problem without detecting such a contact, the tailgate switch commands closing B. Then, the control unit drives the tailgate motor in the closing direction via the driver 103, during which in the event that the piezoelectric sensor detects a contact, the tailgate is instantaneously biased in the opening direction so as to release a caught foreign matter.

With no such catching detected, the closer motor is driven via the driver 109, and the tailgate is locked at the closed position. The feeding to the piezoelectric sensor is stopped again at this timing, and the control unit restores its sleep mode.

When the engine is activated, since charging the battery is started, there should be little concern about a flat battery. However, in this embodiment, the feeding of the piezoelectric sensor still remains disrupted until the tailgate switch sends out an opening command, whereby the dark current is further reduced, thereby making it possible to reduce the load on to the battery.

Reactions of the respective portions to an opening command C and a closing command D from the tailgate switch in such a state that the engine is activated are the same as those to the aforesaid opening command A and closing command B.

In addition, since the battery voltage is instantaneously disconnected because a current of large magnitude flows when the engine is activated as is shown in the figure, when detecting this, the control unit stops the movement of the tailgate or slows down the moving speed thereof, and by causing the moving body to operate normally after the power supply is restored and a predetermined time has been counted since then, the motors and the sensor can be allowed to function properly in an ensured fashion.

Thus, in the moving body opening and closing control system of the embodiment, the moving body opening and closing control system can be provided which can ensure the detection of collision and catching against and by the tailgate when the tailgate is being opened and closed while suppressing the dark current.

### (Embodiment 5)

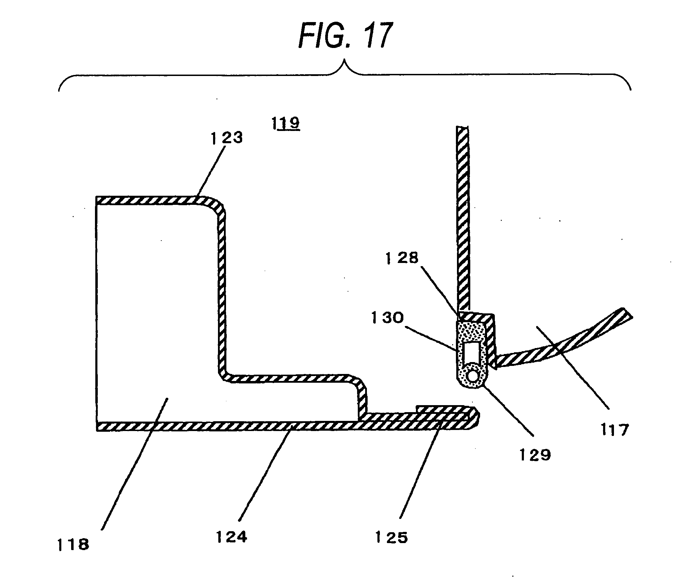

Fig. 17 shows a moving body opening and closing control system according to Embodiment 5 of the invention, and since the basic configuration and function thereof remain the same as those of Embodiment 4, only a different point will be described. This embodiment is such that a sensor is arranged in the location whose cross section is taken along the line B-B in Fig. 10. Namely, a sensor is disposed not on the moving body side but on the body which constitutes a stationary side.

In this configuration, since the sensor is arranged on the stationary side, the sensor is made difficult to be affected by opening and closing vibrations of the door, thereby making it possible to expect a stable detection.

### (Embodiment 6)

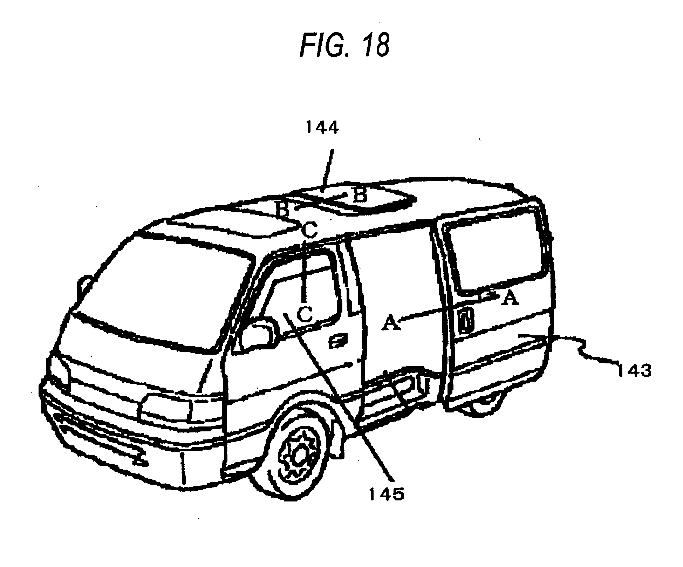

Fig. 18 shows a moving body opening and closing control system according to Embodiment 6 of the invention, and since the basic configuration and function thereof remains the same as those of Embodiment 4, only different points will be described.

As shown in the figure, a piezoelectric sensor can be provided at one end of a sliding door 143 at a location whose cross section is indicated by the line A-A. In addition, the invention can be embodied similarly at a location on a sunroof 144 whose cross section is indicated by the line B-B. Furthermore, a piezoelectric sensor can be provided at a location of a power window whose cross section is indicated by the line C-C.

In this configuration, the invention can be applied not only to the tailgate but also widely to the sliding door, the sunroof and the power window.

While the invention has been described in detail and by reference to the specific embodiments, it is clear to those skilled in the art that the invention can be changed and modified variously without departing from the spirit and scope thereof.

The subject patent application is based on the Japanese Patent Application No. 2003-107614 filed on April 11, 2003 and the Japanese Patent Application No. 2003-105084 filed on April 9, 2003, and the contents thereof are incorporated herein by reference.

### <Industrial Applicability>

As is clear from Embodiments 1 to 3, according to the moving device of the invention, even in the event that a contact of an object cannot be detected in the middle of a closing operation of the moving body due to, for example, the object in contact being soft and/or the speed of the moving body being slow, when a removal of the object is detected by the object detecting means, since the movement of the moving body is stopped or the moving direction thereof is reversed, the safety is increased. In addition, as is clear from Embodiments 4 to 6, according to the moving body opening and closing control system, the safe moving body opening and closing control system can be realized which can not only detect a collision of an object against the door and a catching thereof by the door when the door is being closed while suppressing the dark current but also solve the trouble that would otherwise occur when the door is being opened.

## Claims

1. A moving device comprising:
object detecting means for detecting a contact of an object,
a moving body on which the object detecting means is provided,
driving means for driving the moving body and control means for controlling the driving means,
wherein the control means stops the movement of the moving body or controls the driving means in such a manner as to reverse the moving direction of the moving body when the object detecting means detects a contact of an object or detects a removal of the object that has been in contact.

2. A moving device as set forth in Claim 1, wherein the object detecting means comprises a flexible piezoelectric sensor and a detecting portion for detecting a contact or removal of an object based on an output signal of the piezoelectric sensor.

3. A moving device as set forth in Claim 2, wherein the detecting portion determines that either a contact or removal of an object occurs when the amplitude of an output signal of the piezoelectric sensor overpasses a set range which is set in advance.

4. A moving device as set forth in any of Claims 1 to 3, wherein the moving body is at least one of such openable and closable doors as automotive sliding door, tailgate, trunk lid, window of a type that can ascend and descend and sunroof, openable and closable wings on a cargo deck of a truck, and doors and shutters of elevators and buildings.

5. A moving device as set forth in any of Claims 1 to 3, wherein the moving body is a running vehicle having a bumper, and wherein the object detecting means is provided on the bumper.

6. A moving device as set forth in any of Claims 1 to 5, wherein information means is provided which informs that the driving means is to stop the movement of the moving body or reverse the moving direction of the moving body, when the object detecting means detects a contact or removal of an object.

7. A moving body opening and closing control system comprising:
a moving body that is constructed to be opened and closed freely,
a sensor that is attached to the moving body for detecting vibrations generated by a contact of an object or catching of an object and
a control unit for controlling opening and closing operations of the moving body based on an output signal from the sensor,
wherein the control unit starts an energization to the sensor at least with an opening operation of the moving body, and
wherein when a contact of an object is detected by the sensor during a closing operation, the closing operation of the moving body is stopped or the moving body is opened

8. A moving body opening and closing control system as set forth in Claim 7, wherein a piezoelectric sensor which is flexible and which takes the form of a cable is used as the sensor.

9. A moving body opening and closing control system as set forth in Claim 7, wherein when the sensor detects vibrations or catching in the middle of an opening operation of the moving body, the movement of the moving body is stopped or the moving body is closed.

10. A moving body opening and closing control system as set forth in Claim 7, wherein the energization to the sensor is continued while the moving body is in an opened state.

11. A moving body opening and closing control system comprising a moving body that is constructed to be opened and closed freely, a sensor that is attached at a fixing portion that is opposite to the moving body for detecting a catching caused by the moving body and a control unit for controlling the moving body and the sensor, wherein the control unit starts an energization to the sensor at least with an opening operation of the moving body.

12. A moving body opening and closing control system as set forth in Claim 11, wherein a piezoelectric sensor which is flexible and which takes the form of a cable is used as the sensor.

13. A moving body opening and closing control system as set forth in Claim 11, wherein the energization to the sensor is continued while the moving body is in an opened state.

14. A moving body opening and closing control system comprising:
a moving body that is constructed to be opened and closed freely,
a sensor that is attached to the moving body for detecting vibrations generated by a contact of an object or catching of an object and
a control unit for controlling the moving body and the sensor,
wherein the control unit has a function to detect an instantaneous disconnection of a power supply, discontinues the movement of the moving body or reduces the speed thereof when the instantaneous disconnection of the power supply is detected and causes the moving body to normally operate after the power supply is restored and a predetermined time has been counted since then.
